# EUROPEAN PATENT SPECIFICATION

(11) **EP 2 633 723 B1**
(45) Date of publication and mention of the grant of the patent: **19.06.2019**
(21) Application number: 11846074.0
(22) Date of filing: 12.12.2011
(51) Int. Cl.: H04B 1/525, H04W 52/36, H04B 17/14, H04B 17/29

(54) **SYSTEM AND METHOD FOR INTERFERENCE CONTROL IN SIMULTANEOUS TRANSMISSION SYSTEMS**
SYSTEM UND VERFAHREN ZUR INTERFERENZSTEUERUNG IN SIMULTANÜBERTRAGUNGSSYSTEMEN
SYSTÈME ET PROCÉDÉ POUR CONTRÔLER DES INTERFÉRENCES DANS DES SYSTÈMES DE TRANSMISSION SIMULTANÉE

(30) Priority: 10.12.2010 US 422005 P; 07.12.2011 US 201113313843
(43) Date of publication of application: 04.09.2013
(73) Proprietor: Huawei Technologies Co., Ltd., Longgang District Shenzhen, Guangdong 518129 (CN)
(72) Inventor: NERGIS, Aydin, San Diego, California 92130 (US); SHI, Ping, San Diego, California 92129 (US)
(74) Representative: Goddar, Heinz J.
(86) International application number: PCT/CN2011/083830
(87) International publication number: WO 2012/075969

(56) References cited:
- WO-A1-2010/089281
- WO-A1-2012/051952
- CN-A- 1 433 597
- CN-A- 101 888 252
- TSG RAN WG4: "LS on in-device coexistence between LTE and ISM update of TR 36.816", 3GPP DRAFT; R4-104809, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Jacksonville; 20101115, 22 November 2010 (2010-11-22), XP050471148, [retrieved on 2010-11-22]

## Description

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Wireless communication systems generally incorporate many different types of wireless devices, such as mobile phones, data cards, Universal Serial Bus ("USB") dongles, hot-spots, wireless modems, and the like. These systems may utilize simultaneous transmission from more than one transmitter. In such systems, self-interference may affect non-linear radio frequency devices where more than one transmitter is simultaneously transmitting while at least one receiver is actively receiving. This self-interference, sometimes referred to as crosstalk, self-jamming, or transmitter leakage, generally results from coupling of a transmitted signal to the active receiver. For example, the transmission signal may pass through non-linear circuits via radiative coupling, conductive coupling, inductive coupling, magnetic coupling, very-large-scale integration (VLSI) chip coupling, etc.

An output of a non-linear circuit may generate an interference signal with varying spectrum shape, and bandwidth at a radio frequency that may fall within proximity of the carrier frequency of an active receiver in the device. Due to limited isolation, the generated interference signal may leak (e.g., through a duplexer filter) and couple to an input path of the active receiver. The coupled interference signal can degrade the reception performance of the receiver in multiple ways such as reducing dynamic range, increasing noise floor, and potentially contributing additional interference generations with other coupled signals in the receiver path through non-linear stages.

Accordingly, self-interference generation might adversely affect the performance of certain receivers when two or more transmitters are simultaneously transmitting at different carrier frequencies. Various methods may be employed to address interference generated by a device transmitting at more than one radio frequency while receiving at one or more other radio frequencies. These methods may generally be classified into three groups: (1) filtering, (2) cancellation, and (3) control interference generation.

In the first group, filtering may be limited to non-linear front-end components and/or first non-linear blocks on the paths of the transmitters and the receiver of interest. In some cases, the generated interference may fall within or in close proximity to the receiver band of interest, and filtering may not be a useful or sufficient solution. In other cases, the interference may fall outside of the receiver channel bandwidth, but close enough that the filtering in radio frequencies are not sufficient. In these cases, the filtering may be extended to baseband by maintaining the dynamic range at a high level in order to prevent any further non-linear distortion. However, high dynamic range may result in high power consumption and high design costs.

One method in the second group may include cancelling interference at certain radio frequency stages. Another method may include using baseband signal processing to re-generate an interference signal and cancel it at certain radio frequencies. However, many cancellation methods require high dynamic range receivers, as well as complex receiver designs. A method to control the generation of interference according to the third group may include using components of high linearity on the signal paths. However, in cases where the transmission power levels, or the coupled signal power levels are relatively high in a non-linear block, components with high linearity requirements might not be commercially available, and might necessitate high costs and/or designs that are not commercially available.

Another method according to the third group may include planning simultaneous operating frequencies such that no significant interference generation adversely affects the receiver operations. However, this limits the flexibility of network planning on the operator side. Another available method is to limit maximum power levels when two or more transmitters are active. For instance, this may be useful when simultaneously transmitting via a 1x radio transmission technology (1xRTT) network (e.g., for voice) and a long-term evolution (LTE) network (e.g., for data). However, limiting power levels in such cases may generally not be seen optimal as some other factors can determine the level or impact of interference, such as varying frequencies, spectral shapes of transmitting and receiving signals, received signal levels, temperature, etc.

WO 2012/051952 A1 discloses a hybrid FDM/TDM solution for in-device coexistence interference avoidance, in which a user equipment (UE) having a first radio transceiver and a second co-located radio transceiver detects coexistence interference between the two radios based on radio signal measurement. The UE sends an IDC interference indictor to its serving station (eNB). The UE reports IDC information including recommendation for FDM and TDM configurations to the eNB. The eNB receives the IDC interference indicator and evaluates whether to trigger DFM-based solution to mitigate coexistence interference. The eNB also evaluates whether to trigger TDM-based solution to mitigate coexistence interference. The evaluation is based on the recommended FDM and TDM configuration. The eNB may trigger FDM-based, TDM-based solution, or FDM and TDM solution based on the evaluation results of the feasibility and effectiveness of each solution.

WO 2010/089281 A1 discloses that a communication device has a plurality of concurrently operating transceivers, each operating in a respectively different one of a plurality of communication systems, wherein the plurality of concurrently operating transceivers includes a first transceiver and a second transceiver. Operation of the communication device includes the first transceiver ascertaining whether transmissions by the second transceiver are causing interference in a receiver of the first transceiver and if so, performing one or more interference response actions. The one or more interference response actions include ascertaining whether the interference is at an acceptable level and if so then taking no further interference response actions. If the interference is ascertained to be at an unacceptable level, an interference mitigation request is communicated to the second transceiver. The second transceiver can, for example, shift its use of frequencies to a region whereby the first transceiver's band select filter can sufficiently attenuate the second transceiver's signal.

The invention is defined in the independent claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of an embodiment of a wireless communications device.
FIG. 2 is a schematic diagram illustrating an example of interference generation.
FIG. 3 is a schematic diagram of an embodiment of the wireless device depicted in FIG. 1.
FIGS. 4-6 are protocol diagrams of embodiments of a method for controlling interference.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

For clarity, certain embodiments of the present disclosure may be described herein with respect to a wireless device connecting to one or more particular networks such as Third Generation Partnership Project (3GPP) long-term evolution (LTE) and 3GPP2 1x radio transmission technology (1xRTT) networks. However, it is to be understood that embodiments of the present disclosure are not so limited, as the embodiments described herein may be used for any suitable wireless communication networks. Without limitation, such networks may include Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc.

A wireless communication network may implement any suitable radio technologies. A CDMA network, for example, may implement a radio technology such as Universal Terrestrial Radio Access (UTRA), Wideband-CDMA (W-CDMA), CDMA 2000, etc. A TDMA network may implement a radio technology such as Global System for Mobile Communications (GSM). An OFDMA network may implement a radio technology such as Evolved UTRA (E-UTRA), the Institute of Electrical and Electronics Engineers (IEEE) 802.11, IEEE 802.16, IEEE 802.20, Flash-OFDM®, etc. UTRA, E-UTRA, and GSM are part of Universal Mobile Telecommunication System (UMTS). LTE is a release of UMTS that uses E-UTRA.

Communication devices such as mobile phones and data cards may be designed to connect to multiple networks such as a 3GPP LTE network and a 3GPP2 1x/RTT network, where certain services can be received via the 3GPP LTE network and other services can be received via the 3GPP2 1xRTT network. For example, a 3GPP LTE network may provide an unlimited data plan service, while a 3GPP 1xRTT network may provide voice call services on an as-needed basis. This may lead to simultaneous transmissions and receptions on different radio frequency spectrum segments, either in the same operational band or in separate operational bands. However, signals from a transmitter may be coupled to a radio receiver such that the coupling of the transmit signals generates an interference signal leaking to a receiver baseband (e.g., through a radio frequency (RF) front-end), thereby degrading the performance of the receiver.

To address such self-interference, a variety of approaches may be employed. For example, one of the simultaneous transmissions may be abandoned. Doing so, however, might disturb user experience. Moreover, simultaneous transmissions may be desired or necessary due to operational requirements such as keeping a device connected to multiple networks with different radio frequency links. Therefore, it might be desirable to maintain simultaneous transmissions to the extent possible. Other approaches include implementing components and circuits of higher linearity, and employing certain isolation techniques. In addition, maximum transmission power levels of one or more simultaneous transmission paths may be limited or constrained. Some of these other approaches, however, may have one or more drawbacks. For instance, components and circuits of relatively high linearity may be unavailable in the conventional market, may take longer time to develop, and/or may be expensive relative to the targeted market of the device.

Disclosed herein are systems and methods for controlling the generation of interference during simultaneous transmissions in a device.

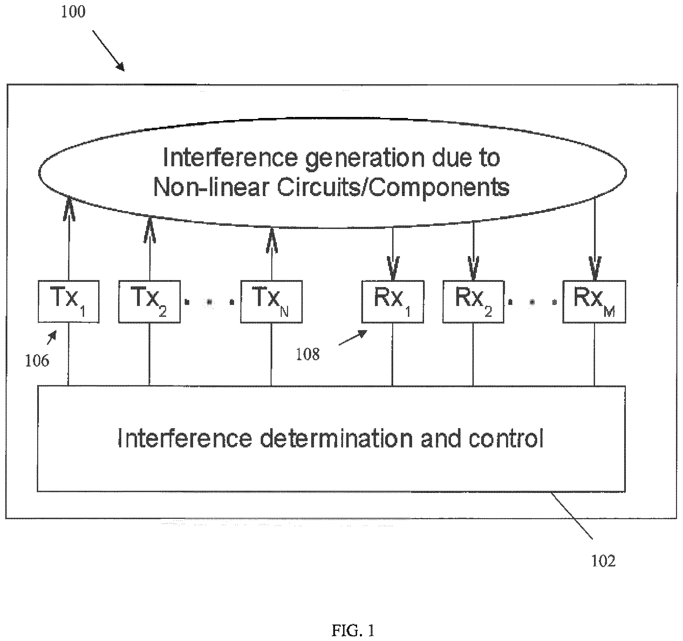

FIG. 1 illustrates an embodiment of a wireless device 100 capable of conducting simultaneous communication sessions via multiple networks. The wireless device 100 may take the form of a multi-mode communications device configured to transmit and receive signals while operating in multiple modes. In addition, the wireless device 100 may use different types of radio access technology (RAT) to access a network. Examples of RATs or of network technologies that might use different types of RATs include Code Division Multiple Access 2000 (CDMA2000), UTRAN (UTMS (Universal Mobile Telecommunications System) Terrestrial Radio Access Network), Global System for Mobile Communications (GSM), GSM Enhanced Data for GSM Evolution (EDGE) Radio Access Network (GERAN), Generic Access Network (GAN), Wireless Local Area Network (WLAN), General Packet Radio Service (GPRS), Worldwide Interoperability for Microwave Access (WiMAX), 1x Evolution-Data Optimized (1x EV-DO), High-Speed Downlink Packet Access (HSDPA), Digital Enhanced Cordless Technology (DECT), and High Rate Packet Data (HRPD).

As skilled artisans will readily appreciate, the wireless device 100 may employ any suitable circuitry to communicate, e.g., radio frequency (RF) circuits, transceivers, antennas, etc. In addition, the wireless device 100 may include various components commonly employed in wireless communications devices. Briefly, for example, the wireless device 100 may include a processor such as a microprocessor, microcontroller, or digital signal processor having a central processing unit (CPU). The wireless device 100 may also include storage media such as memory (e.g., read only memory (ROM), random access memory (RAM), and erasable programmable ROM (EPROM)) or storage devices (e.g., disk drives, compact discs (CDs), and digital video discs (DVDs)), etc. Of course, numerous other components associated with the wireless device 100 may be employed, and therefore, necessarily fall within the purview of the present disclosure. Since the construction and operation of components associated with wireless devices of the sort depicted in FIG. 1 is well known and understood, discussion of the wireless device 100 will herein be limited to the extent necessary for enabling a proper understanding of the present disclosure.

The wireless device 100 may comprise radio devices such as transceivers and/or receivers 108 and transmitters 106 for receiving and transmitting signals via links between the wireless device 100 and other communication devices. According to one aspect, the wireless device 100 comprises a plurality of transmitters 106 Tx₁-Tx_{N} equal to N, where N is greater than 1. The wireless device 100 also comprises one or more receivers 108 R_{X1}-R_{XM} equal to M, where M is greater than zero. Unless otherwise indicated, "transmitters Tx_{N}" will herein refer collectively to transmitters 106 Tx₁-Tx_{N}, where a "transmitter Tx" may refer to any one of the transmitters 106 Tx₁-Tx_{N}. Similarly, "receivers Rx_{M}" will herein refer collectively to receivers 108 Rx₁-Rx_{M}, where a "receiver Rx" may refer to any one of the receivers 108 Rx₁-Rx_{M}.

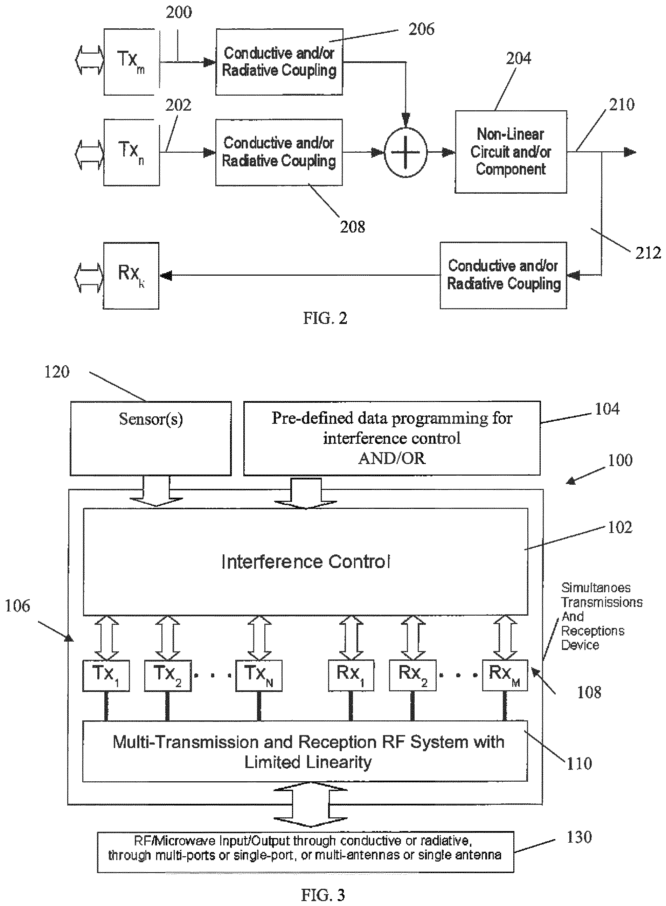

During certain modes of operation, the wireless device 100 may utilize at least one transmitter 106 (e.g., Tx₁) and receiver 108 (e.g., Rx₁) to simultaneously transmit and receive data. The wireless device 100 may also utilize at least two transmitters 106 (e.g., Tx₁ and Tx₂) to simultaneously transmit signals at different radio carrier frequencies. As discussed further below, the wireless device 100 may be configured to vary the power level of one or more transmitters 106 Tx_{N} to reduce and/or prevent the generation of self-interference during simultaneous transmissions. Referring briefly to FIG. 2, an example of interference generation will be described. During a simultaneous transmission, a signal 200 transmitted from a first transmitter Txₘ and a signal 202 transmitted from a second transmitter Txₙ may couple to a non-linear circuit and/or component 204. As indicated in boxes 206 and 208, such coupling may occur via conductive coupling, radiative coupling, or a combination thereof. In turn, an output 210 of the non-linear circuit and/or component 204 may generate an interference signal 212 in one or more different frequencies than the frequencies of the two transmit signals 200 and 202. This interference signal 212 may couple to a path of an active receiver Rxₖ (e.g., via conductive and/or radiative coupling), and therefore, potentially degrade its performance. Of course, if multiple receivers are simultaneously active, the interference signal 212 may couple to one or more receiver paths and potentially degrade the performance of each corresponding receiver.

As shown in FIG. 3, the wireless device 100 may comprise a control unit 102 for determining and controlling interference. Those of ordinary skill in the art will understand that the control unit 102 may be implemented via any suitable software, hardware, firmware, or combinations thereof. The control unit 102 may comprise or be operatively connected to a database 104, which may be configured to store instructions executable by the control unit 102 to control various operating functions of the wireless device 100. The database 104 is communicatively linked to the plurality of transmitters 106 Tx_{N} and receivers 108 Rx_{M}, each of which may be configured to populate the database 104 with various types of data. Without limitation, such data may comprise operation carrier frequencies, signal characteristics (e.g., signal strength levels), modes of operation, performance figures for receptions and transmissions (e.g., signal quality indicators), etc.

In some embodiments, the control unit 102 may be communicatively linked to one or more sensors associated with the wireless device 100. For instance, the wireless device 100 may include sensors 120 for monitoring operating conditions such as temperatures corresponding to the transmitters Tx_{N}, receivers Rx, RF/microwave circuits, etc. In addition, one or more sensors may be integrated with various non-linear RF/microwave components 130. The wireless device 100 may further comprise an RF sensor to monitor various RF signals over a wide range of frequencies without the requirement to demodulate and decode the underlying signals. For example, a high power detector (HDET) can be placed on transmitter path to monitor the output power of that specific TX chain. Some or all of the sensors 120 associated with the wireless device 100 may communicate sensed measurement values to the control unit 102, which may use these measurements to dynamically control the operation of one or more transmitters 106 Tx, receivers 108 Rx, RF/microwave circuits 130, etc. In one aspect, for example, the control unit 102 may be configured to periodically obtain readings of a circuit board temperature in order to compensate for variations in temperature. One or more temperature sensors may be positioned to measure the temperature at one or more portions of the wireless device that may impact a signal quality and interference generation, which may include integrated, for example, chips within the wireless device, a radio frequency (RF)/microwave circuit area of the wireless device, and the transmitters 106 and receivers 108. In addition to the information mentioned above, the database 104 may store previously captured and pre-programmed information, which the control unit 102 may use to create linear and non-linear self-interference models and estimate interference levels. For instance, prior to enabling a simultaneous transmission involving multiple radio devices, the control unit 102 may use such information to estimate the level of impact that interference may have on an active receiver 108. The control unit 102 may also perform an initial evaluation to calculate a maximum amount of power allowed for each active transmitter 106.

As discussed below, the control unit 102 may implement various techniques to control interference resulting or potentially resulting from radio devices during simultaneous transmissions. Unless otherwise indicated, "radio devices" may herein refer to one or more transmitters 106 Tx_{N} and receivers 108 Rx_{M}, and/or transceivers or like devices comprising circuitry for transmitting and receiving data. Moreover, each radio device may comprise suitable circuitry for modulating/demodulating data (e.g., audio or voice) bits into a format that is compatible with a particular communication standard utilized by the radio devices. Many well-defined wireless communication standards (e.g., IEEE 802.11, Bluetooth, advanced mobile phone services (AMPS), digital AMPS, global system for mobile communications (GSM), code division multiple access (CDMA), local multi-point distribution systems (LMDS), multi- channel-multi-point distribution systems (MMDS), and/or variations thereof) exist to facilitate such wireless communication between radio devices.

In some implementations, the control unit 102 may use static and dynamic information to control the operation of transmitters 106 and receivers 108. During a transmission, for example, the control unit 102 may dynamically monitor the active receivers 108 for variances in reception quality. Thus, if a variance causes the quality of a reception signal to drop below a predetermined threshold, the control unit 102 may adjust power constraints such as the maximum allowable power level for each active transmitter 106. Furthermore, the control unit 102 may employ artificial intelligence algorithms, machine learning algorithms, adaptive control algorithms, self-optimization algorithms, and/or other suitable algorithms to dynamically fine tune certain aspects of the interference control model.

In a first implementation, the control unit 102 may implement a technique referred to herein as, "Joint System Selection/Reselection." In a second implementation, the control unit 102 may implement a technique referred to herein as, "Interference-Aware Handover." In a third implementation, the control unit 102 may implement a technique referred to herein as, "Dynamic Power Limiting." These and other implementations are described in further detail below.

### Joint System Selection/Reselection

At start-up or upon loss of coverage, the wireless device 100 may be configured to search for and select or reselect a network for service acquisition. Those of ordinary skill in the art will appreciate that the wireless device 100 may select a network according to any suitable manner. For instance, the wireless device 100 may reference a list of networks stored in the database 104 and attempt to access the most preferred or prioritized network. Such a list may also include identifiers for each network/system listed, and acquisition parameters including band, frequency, and mode for the listed network/systems. The list of networks may be periodically updated such as by an external source (e.g., the wireless device's service provider), through wireless downloads, or through any suitable data transfer scheme.

In addition to or in lieu of selecting a network listed highest on a list, the wireless device 100 may select a network that is determined to provide the highest quality of service (QoS), enable the wireless device 100 to consume the least amount of power, generate the least amount of interference, etc. The wireless device 100 may make such determinations based on signal strength characteristics such as the signal to interference ratio (SIR) or signal to noise ratio (SNR) of cells. Other factors that the wireless device 100 may take into account include a preferred Radio Access Technology (RAT), frequency band, etc. For instance, the wireless device 100 may scan frequencies in some or all bands of each RAT to determine which frequencies carry physical channels.

As mentioned above, the wireless device 100 may support various modes of operations. For each supported mode, the wireless device 100 may scan different systems, RATs, frequency bands, etc. Moreover, the wireless device 100 may scan frequency bands based on a preferred or prioritized list of channels, and populate the database 104 with a list of available physical channels and corresponding signal qualities. In sum, the wireless device 100 may select networks using various types of information such as that described above.

In some cases, the wireless device 100 may perform a selection/reselection procedure that may be optimal for a particular system, but that may not be optimal for combined operating systems. For example, the combination of two modes/channels may cause serious interference in a simultaneous transmission mode. To reduce or prevent such interference, a Joint System Selection/Reselection technique according to the present disclosure may be used, where the control unit 102 selects or reselects a channel/system using static information and dynamic information.

Static information may comprise configuration parameters such as preferred or prioritized modes of operation, spectral information such as shape and bandwidth, non-linearity characteristics of the transmitting and receiving components/circuits, factory calibration data, predefined data programming information, etc. Dynamic information may comprise information that is readily or instantly available such as operating bands and carrier frequencies of active transmitters 106 and receivers 108, predicted and/or initial target power levels for each transmitter 106, received signal strengths at each active receiver, channel quality estimates at each active receiver 108, physical conditions such as temperature, etc. Static information and dynamic information may be stored in the database 104, along with information associated with each radio device.

In an embodiment, each radio device may be configured to report a list of available channels to the control unit 102. Each radio device may be further configured to report corresponding channel information such as received signal strength indicators (RSSI), signal quality levels, error rates associated with received signals, etc. The control unit 102 may determine the best channel/system for each radio device based on the reported information, as well as information stored in the database 104, e.g., hardware linearity information, historical data, etc. In making this determination, the control unit 102 may employ a selection algorithm designed to achieve optimal system performance with minimal interference.

According to one aspect, the selection algorithm may use static and dynamic information to calculate an estimated level of interference generation for a simultaneous transmission. Based on the estimated interference levels, the control unit 102 may determine which selection of frequency bands/channels would result in the least amount of interference using the channels/systems available. The control unit 102 may then send the channel/system selection results to the corresponding radio devices. Accordingly, the control unit 102 may utilize the Joint System Selection/Reselection technique to select a channel/system for a given radio device based not only on its own selection standards/preferences, but also based upon those for all of the radio devices.

### Interference-Aware Handover

During the course of an active communication session, one or more radio devices may experience poor channel conditions. Radio conditions may be determined using various parameters such as signal strength, path loss, propagation delay, received reference symbol power, and other signal quality parameters known to one of skill in the art. Based on such parameters, the control unit 102 - or other suitable component(s) associated with the wireless device 100 - may determine that the quality of the radio conditions for an existing communication session has deteriorated such that the session might need to be handed over to a different cell or network. Several nearby cells might be available to receive the handoff, and several different channels/frequency bands/RATs might be available in each of the cells.

In general, each radio device may perform a handover based on its own measurement report, and perhaps with assistance from a network. This handover procedure may not be optimal because self-interference resulting from simultaneous transmissions might be higher than as determined by a given radio device without simultaneous transmission, which was the case during the measurement activity required for handover. For instance, when a radio device performs a channel measurement, there is no active or real-time transmission in the corresponding TX band, and therefore, there is no simultaneous transmission occurring at such time. To better optimize handover procedures, an Interference-Aware Handover technique according to the present disclosure may be used such that when handover events are triggered, each radio device may report channel measurement information such as channel quality indicators (CQIs) to the control unit 102.

Using the channel measurement reports together with channel/band/IRAT and other system information, the control unit 102 may estimate the potential interference that might result during a simultaneous transmission involving two or more radio devices. The control unit 102 may use estimated interference levels to modify or update the reported channel quality information, which may be stored in the database 104. In turn, the control unit 102 may send modified channel quality information to a corresponding radio device and network component (e.g., base node, enhanced based node (eNB), access point, etc.) so that an optimal system may be selected for the handover. By using the Interference-Aware Handover technique for performing a handover, the control unit 102 may take into account the capabilities of each radio device in order to select a system determined to result in the least amount of interference during a simultaneous transmission between multiple radio devices.

### Dynamic Power Limiting

The control unit 102 may implement a Dynamic Power Limiting technique to limit the maximum power output of one or more radio devices to an acceptable level so as to reduce interference during a simultaneous transmission. This technique may be implemented in firmware, hardware, software, or any combination thereof. In a combined firmware/software implementation, signal quality indicators such as a received signal strength indication (RSSI) from a radio device of high priority may be used to predict its transmit power. A radio device may be defined to be of lower or higher priority according to any suitable criteria, e.g., preferred operating mode, dynamic range, etc. The transmit power of a high priority radio device may be predicted based on dynamic information gleaned from parameters such as channel quality and RSSI, which may depend upon factors such as path loss, error rates, shadowing and fading of the radio link between a corresponding transmitter and receiver, etc. In addition, fading margin may be added to the predicted transmit power, where the added fading margin may be based on channel statistics derived from RSSI data. (Fading of the signal can occur randomly in the radio propagation. When the signal is faded, the received signal strength at the receiver end may drop below the acceptable level. In order to overcome this phenomenon, the signal may be transmitted at a higher power than the average power level. This is referred to as fading margin.)

In one aspect, the control unit 102 may predict the transmit power of the high priority radio device. In another aspect, the predicted transmit power may be made by another component associated with the wireless device 100, in which case the prediction result will be sent to the control unit 102. In either aspect, the control unit 102 may use the predicted transmit power of the high priority radio device to estimate an interference level for a given combination of frequencies/Bandwidth/IRAT. As such, the control unit 102 can set a maximum transmit power for at least one radio device of lower priority. For instance, the control unit 102 may be configured to set the maximum transmit power of the radio device of lower priority such that during a simultaneous transmission, the low priority radio device may transmit at the highest acceptable power level, while preventing or limiting interference generation at or below an acceptable level. During the simultaneous transmission, the control unit 102 may be further configured to periodically update the maximum transmit power settings for the low priority radio device based on real-time information.

With the use of the Dynamic Power Limiting technique, the maximum transmit power of a low priority radio device may be limited based on a predicted transmission power, which is usually lower than the maximum transmit power (e.g., as used in a normal power limiting case). By adding the fading margin, the predicted transmit power can help sustain channel fading and achieve desired performance levels, even in spite of software control delays. In hardware-based implementations, transmit powers may be predicted using transceiver transmit control signals, which may include pulse duration modulation (PDM), control information such as transmit signal strength indicators (TSSI), and power amplifier (PA) gain control information, etc. The combination of such control information with selected fading margin may be dynamically fed to the control unit 102. In turn, the control unit 102 may determine the maximum transmit power for a low priority radio device (e.g., using hardware logic circuitry), and set the transmitting portion of the low priority radio device accordingly.

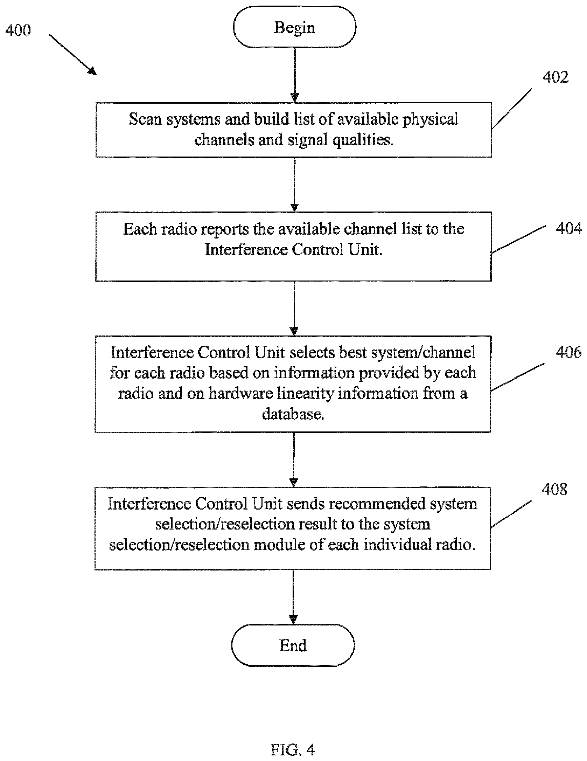

FIG. 4 illustrates an exemplary embodiment of a Joint System Selection/Reselection method 400 for interference control. The Joint System Selection/Reselection method 400 may be implemented on a wireless communication device (e.g., wireless device 100). The Joint System Selection/Reselection method 400 may begin at block 402 where, for each supported mode, the wireless communication device may scan different systems frequency bands based on a preferred channel list, and build a list of available physical channels with corresponding signal qualities. At block 404, each radio may report the available channel list to an Interference Control Unit (e.g., Interference Control Unit 102). At block 406, the Interference Control Unit selects the best system/channel for each radio based on information provided by each radio and on hardware linearity information from a database (e.g., database 104). At block 408, the Interference Control Unit sends the recommended system selection/reselection result to the system selection/reselection module of each individual radio. The method 400 may then end.

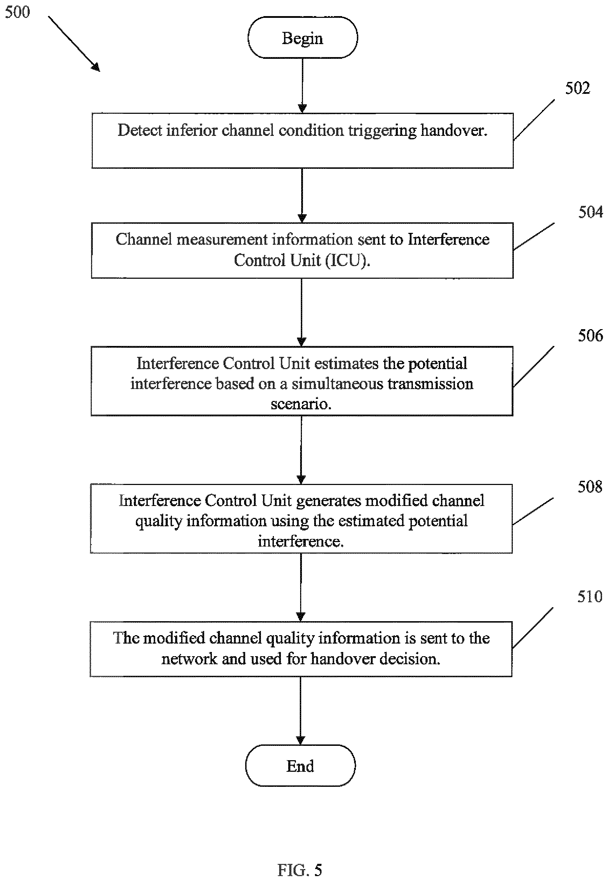

FIG. 5 illustrates an embodiment of a method 500 for interference aware handover. The method 500 may be implemented on a wireless communication device (e.g., wireless device 100). The method 500 may begin at block 502 where the wireless communication device may detect an inferior channel condition for an active radio triggering handover. At block 504, the channel measurement information is sent to the Interference Control Unit (e.g., Interference Control Unit 102). At block 506, the Interference Control Unit estimates the potential interference based on a simultaneous transmission scenario. At block 508, the Interference Control Unit generates modified channel quality information using the estimated potential interference. At block 510, the modified channel quality information is sent to the network and used for a handover decision. The method 500 may then end.

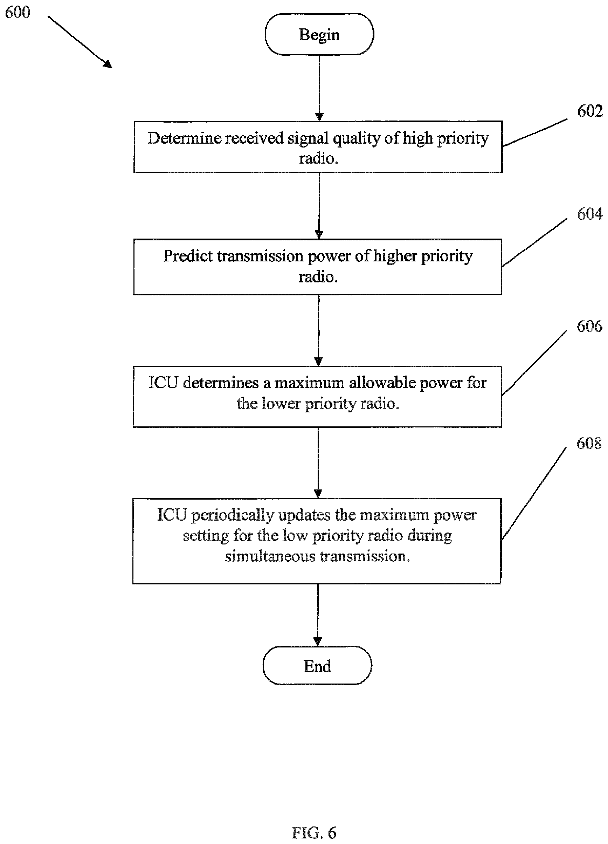

FIG. 6 illustrates an embodiment of a method 600 for dynamic power limiting. The method 600 maybe implemented on a wireless communication device (e.g., wireless device 100). The method 600 may begin at block 602 where the wireless communication device may determine the received signal quality of a high priority radio. At block 604, the wireless communication device may predict the transmission power of the higher priority radio. The predicted transmission power of the higher priority radio may be based on the channel quality (e.g., the Received Signal Strength Indication (RSSI)) and may add the fading margin that is based on the channel statistics derived from the RSSI data. At block 606, the interference Control Unit or some other component within the wireless communication device may determine a maximum allowable power for the lower priority radio using the predicted power of the higher priority radio. At block 608, the Interference Control Unit may periodically update the maximum power setting for the low priority radio to be used during simultaneous transmission based on updated dynamically determined RSSI and/or other information. The method 600 may then end.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rₗ, and an upper limit, Rᵤ, is disclosed, any number falling within the range is specifically disclosed. In particular, the following numbers within the range are specifically disclosed: R = Rₗ + k ^{∗} (Rᵤ - Rₗ), wherein k is a variable ranging from 1 percent to 100 percent with a 1 percent increment, i.e., k is 1 percent, 2 percent, 3 percent, 4 percent, 7 percent, ..., 70 percent, 71 percent, 72 percent, ..., 97 percent, 96 percent, 97 percent, 98 percent, 99 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure. The discussion of a reference in the disclosure is not an admission that it is prior art, especially any reference that has a publication date after the priority date of this application. The disclosure of all patents, patent applications, and publications cited in the disclosure are hereby incorporated by reference, to the extent that they provide exemplary, procedural, or other details supplementary to the disclosure.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A wireless apparatus (100) comprising:
a first radio (106, 108) having a first priority, the first radio comprising a first transmitter and a first receiver;
a second radio (106, 108) having a second priority lower than the first priority, the second radio comprising a second transmitter and a second receiver, wherein first and second radio are configured for simultaneous transmission; and
a control unit (102) configured to determine a received signal quality of the first radio; predict the transmission power of the first radio based on the received signal quality and other dynamic and static information wherein the predicted transmission power of the first radio is less than or equal to a maximum power level available to the first radio; and determine a maximum allowable power of the second radio using the predicted power of the first radio to control interference generation during simultaneous transmission.

2. The wireless apparatus of claim 1, wherein the dynamically determined information comprises at least one of the following: a band of operation; a carrier frequency of active ones of the first and second radio;
a current target power level for at least one of the first and second radio; an initial target power level for at least one of the first and second radio; a received signal strength for at least one of the first and second radios; an estimate of channel quality for at least one of the first and second radios; or a priority to a specified mode of operation.

3. The wireless apparatus of claim 1, wherein the dynamically determined information comprises spectral information that is the physical signal characteristics of the desired transmit and receive signals, adjusted channel signals, and potential interference generated internally or coupled externally.

4. The wireless apparatus of claim 1, wherein the dynamically determined information comprises a channel bandwidth or quality of reception variation for the first and the second radios.

5. The wireless apparatus of claim 1, further comprising:
at least one temperature sensor for measuring the temperature of at least one portion of the wireless device that may impact a signal quality and interference generation,
wherein the dynamically determined information comprises the temperature.

6. The wireless apparatus of claim 5, wherein the portion comprises at least one of the first transmitter and second transmitter.

7. The wireless apparatus of claim 5, wherein the portion comprises at least one of the first receiver and second receiver.

8. The wireless apparatus of claim 5, wherein the portion comprises a radio frequency (RF)/microwave circuit area of the wireless device.

9. A method (600) for dynamic power limiting during simultaneous transmission of a first and second radio on a wireless device, the first radio comprising a first transmitter and a first receiver and the second radio comprising a second transmitter and a second receiver, the steps of the method being:
determining (602) a received signal quality of the first radio having a first priority;
predicting (604) the transmission power of the first radio based on the received signal quality and other dynamic and static information wherein the predicted transmission power of the first radio is less than or equal to a maximum power level available to the first radio; and
determining (606) a maximum allowable power of the second radio having a second priority using the predicted power of the first radio to control interference generation, wherein the second priority is lower than the first priority.

10. The method of claim 9, wherein static information comprises a fading margin, wherein the fading margin is based on channel statistics derived from a received signal strength indication (RSSI) of the first radio.

11. The method of claim 9, wherein the predicted transmission power of the first radio is further based on dynamically determined information that comprises at least one of band of operation, carrier frequency of active ones of the first and second transmitters and the first and second receivers, current target power levels for each of the first and second transmitters, initial target power levels for each of the first and second transmitters, received signals strengths for each of the first and second receivers, and an estimate of channel quality for each of the first and second receivers.

## Patentansprüche

1. Drahtlose Vorrichtung (100), die Folgendes umfasst:
ein erstes Funkmodul (106, 108), das eine erste Priorität besitzt, wobei das erste Funkmodul einen ersten Sender und einen ersten Empfänger enthält;
ein zweites Funkmodul (106, 108), das einen zweite Priorität besitzt, die niedriger als die erste Priorität ist, wobei das zweite Funkmodul einen zweiten Sender und einen zweiten Empfänger enthält, wobei
das erste und das zweite Funkmodul zur gleichzeitigen Übertragung konfiguriert sind und
eine Steuereinheit (102), die konfiguriert ist, eine Empfangssignalqualität des ersten Funkmoduls zu bestimmen; die Sendeleistung des ersten Funkmoduls auf der Grundlage der Empfangssignalqualität und weiterer dynamischer und statischer Informationen vorherzusagen, wobei die vorhergesagte Sendeleistung des ersten Funkmoduls kleiner oder gleich einer maximal für das erste Funkmodul verfügbaren Sendeleistung ist; und eine maximal zulässige Leistung des zweiten Funkmoduls unter Verwendung der vorhergesagten Leistung des ersten Funkmoduls zu bestimmen, um die Interferenzerzeugung während gleichzeitigen Sendens zu steuern.

2. Drahtlose Vorrichtung nach Anspruch 1, wobei die dynamisch bestimmten Informationen Folgendes umfassen: ein Betriebsband; eine Trägerfrequenz von aktiven Elementen des ersten und des zweiten Funkelements; einen aktuellen Soll-Leistungspegel für das erste und/oder das zweite Funkmodul; einen anfänglichen Soll-Leistungspegel für das erste und/oder das zweite Funkmodul; eine Empfangssignalstärke für das erste und/oder das zweite Funkmodul; eine Schätzung der Kanalqualität für das erste und/oder das zweite Funkmodul und/oder eine Priorität für einen bestimmten Betriebsmodus.

3. Drahtlose Vorrichtung nach Anspruch 1, wobei die dynamisch bestimmten Informationen spektrale Informationen, die die physikalischen Signaleigenschaften des gewünschten Sendesignals und Empfangssignals sind, angepasste Kanalsignale und mögliche Interferenzen, die intern erzeugt werden oder extern eingekoppelt werden, umfassen.

4. Drahtlose Vorrichtung nach Anspruch 1, wobei die dynamisch bestimmten Informationen eine Kanalbandbreite oder Empfangsqualitätsschwankungen für das erste und das zweite Funkmodul umfassen.

5. Drahtlose Vorrichtung nach Anspruch 1, die ferner Folgendes umfasst:
mindestens einen Temperatursensor, um die Temperatur von mindestens einem Teil der drahtlosen Einrichtung, der Auswirkungen auf eine Signalqualität und eine Interferenzerzeugung haben kann, zu messen, wobei
die dynamisch bestimmten Informationen die Temperatur umfassen.

6. Drahtlose Vorrichtung nach Anspruch 5, wobei der Teil den ersten Sender und/oder den zweiten Sender umfasst.

7. Drahtlose Vorrichtung nach Anspruch 5, wobei der Teil den ersten Empfänger und/oder den zweiten Empfänger umfasst.

8. Drahtlose Vorrichtung nach Anspruch 5, wobei der Teil einen Hochfrequenzschaltungsbereich (HF-Schaltungsbereich)/Mikrowellenschaltungsbereich der drahtlosen Einrichtung umfasst.

9. Verfahren (600) zur dynamischen Leistungsbeschränkung während gleichzeitigen Sendens eines ersten und eines zweiten Funkmoduls in einer drahtlosen Einrichtung, wobei das erste Funkmodul einen ersten Sender und einen ersten Empfänger umfasst und das zweite Funkmodul einen zweiten Sender und einen zweiten Empfänger umfasst und die Schritte des Verfahrens Folgende sind:
Bestimmen (602) einer Empfangssignalqualität des ersten Funkmoduls, das eine erste Priorität besitzt;
Vorhersagen (604) der Sendeleistung des ersten Funkmoduls auf der Grundlage der Empfangssignalqualität und weiterer dynamischer und statischer Informationen vorherzusagen, wobei die vorhergesagte Sendeleistung des ersten Funkmoduls kleiner oder gleich einer maximal für das erste Funkmodul verfügbaren Sendeleistung ist; und
Bestimmen (606) einer maximal zulässigen Leistung des zweiten Funkmoduls, das eine zweite Priorität besitzt, unter Verwendung der vorhergesagten Leistung des ersten Funkmoduls, um die Interferenzerzeugung zu steuern, wobei die zweite Priorität geringer als die erste Priorität ist.

10. Verfahren nach Anspruch 9, wobei die statischen Informationen eine Schwundmarge umfassen, wobei die Schwundmarge auf Kanalstatistiken, die aus einer Empfangssignalstärkenangabe (RSSI) des ersten Funkmoduls hergeleitet werden, basiert.

11. Verfahren nach Anspruch 9, wobei die vorhergesagte Sendeleistung des ersten Funkmoduls ferner auf dynamisch bestimmten Informationen, die ein Betriebsband, eine Trägerfrequenz von aktiven Elementen des ersten und des zweiten Senders und des ersten und des zweiten Empfängers, aktuelle Soll-Leistungspegel sowohl für den ersten als auch den zweiten Sender, anfängliche Soll-Leistungspegel sowohl für den ersten als auch den zweiten Sender, Empfangssignalstärken sowohl für den ersten als auch den zweiten Empfänger und/oder eine Schätzung der Kanalqualität sowohl für den ersten als auch den zweiten Empfänger umfassen, basiert.

## Revendications

1. Appareil sans fil (100) comprenant :
une première radio (106, 108) ayant une première priorité, la première radio comprenant un premier émetteur et un premier récepteur ;
une seconde radio (106, 108) ayant une seconde priorité inférieure à la première priorité, la seconde radio comprenant un second émetteur et un second récepteur,
où les première et seconde radios sont configurées pour une transmission simultanée ; et
une unité de commande (102) configurée pour déterminer une qualité de signal reçu de la première radio ; prédire la puissance d'émission de la première radio sur la base de la qualité de signal reçu et d'autres informations dynamiques et statiques, où la puissance d'émission prévue de la première radio est inférieure ou égale à un niveau de puissance maximal disponible pour la première radio ; et déterminer une puissance maximale admissible de la seconde radio en utilisant la puissance prévue de la première radio pour contrôler la génération des interférences pendant la transmission simultanée.

2. Appareil sans fil selon la revendication 1, dans lequel les informations déterminées dynamiquement comprennent au moins l'un des éléments suivants : une bande de fonctionnement ;
une fréquence porteuse des fréquences actives des première et seconde radios ;
un niveau de puissance cible courant pour au moins l'une des première et seconde radios ;
un niveau de puissance cible initial pour au moins l'une des première et seconde radios ;
une intensité de signal reçu pour au moins l'une des première et seconde radios ;
une estimation de la qualité des canaux pour au moins l'une des première et seconde radios ; ou
une priorité par rapport à un mode de fonctionnement spécifié.

3. Appareil sans fil selon la revendication 1, dans lequel les informations déterminées dynamiquement comprennent des informations spectrales qui sont les caractéristiques de signaux physiques des signaux d'émission et de réception souhaités, des signaux de canal ajustés et des interférences potentielles générées en interne ou couplées en externe.

4. Appareil sans fil selon la revendication 1, dans lequel les informations déterminées dynamiquement comprennent une largeur de bande de canal ou une variation de qualité de réception pour les première et seconde radios.

5. Appareil sans fil selon la revendication 1, comprenant en outre :
au moins un capteur de température pour mesurer la température d'au moins une partie du dispositif sans fil qui peut influer sur la qualité du signal et la génération des interférences,
où les informations déterminées dynamiquement comprennent la température.

6. Appareil sans fil selon la revendication 5, dans lequel la partie comprend au moins l'un du premier émetteur et du second émetteur.

7. Appareil sans fil selon la revendication 5, dans lequel la partie comprend au moins l'un du premier récepteur et du second récepteur.

8. Appareil sans fil selon la revendication 5, dans lequel la partie comprend une zone de circuit radiofréquence (RF)/micro-ondes du dispositif sans fil.

9. Procédé (600) de limitation dynamique de puissance au cours de la transmission simultanée d'une première radio et d'une seconde radio sur un dispositif sans fil, la première radio comprenant un premier émetteur et un premier récepteur, et la seconde radio comprenant un second émetteur et un second récepteur, le procédé comprenant les étapes suivantes :
déterminer (602) une qualité de signal reçu de la première radio ayant une première priorité ;
prédire (604) la puissance d'émission de la première radio sur la base de la qualité du signal reçu et d'autres informations dynamiques et statiques, où la puissance d'émission prévue de la première radio est inférieure ou égale à un niveau de puissance maximum disponible pour la première radio ; et
déterminer (606) une puissance maximale admissible de la seconde radio ayant une seconde priorité en utilisant la puissance prévue de la première radio pour contrôler la génération des interférences, où la seconde priorité est inférieure à la première priorité.

10. Procédé selon la revendication 9, dans lequel des informations statiques comprennent une marge d'évanouissement, où la marge d'évanouissement est basée sur des statistiques de canal dérivées d'une indication d'intensité de signal reçu (RSSI) de la première radio.

11. Procédé selon la revendication 9, dans lequel la puissance d'émission prévue de la première radio est en outre basée sur des informations déterminées dynamiquement qui comprennent au moins l'un des éléments suivants : une bande de fonctionnement, la fréquence porteuse des dispositifs actifs parmi les premier et second émetteurs et les premier et second récepteurs, les niveaux de puissance cibles courants pour chacun des premier et second émetteurs, les niveaux de puissance cibles initiaux pour chacun des premier et second émetteurs, les intensités des signaux reçus pour chacun des premier et second récepteurs et une estimation de qualité des canaux pour chacun des premier et second récepteurs.
